# EUROPEAN PATENT SPECIFICATION

(11) **EP 1 960 774 B1**
(45) Date of publication and mention of the grant of the patent: **18.11.2009**
(21) Application number: 06808719.6
(22) Date of filing: 01.12.2006
(51) Int. Cl.: G01N 33/49, G01N 33/543

(54) **SENSOR**
SENSOR
CAPTEUR

(30) Priority: 01.12.2005 GB 0524580
(43) Date of publication of application: 27.08.2008
(73) Proprietor: SPHERE Medical Limited, Cambridge CB2 5GG (GB)
(72) Inventor: LAITENBERGER, Peter, G., Cambridge CB2 5GG (GB); HENDRY, Stuart, P., Cambridge CB2 5GG (GB)
(74) Representative: Gillard, Richard Edward
(86) International application number: PCT/GB2006/004496
(87) International publication number: WO 2007/063323

(56) References cited:
- WO-A-2005/075995
- US-A- 5 910 286
- US-B1- 6 440 296
- PETCU M ET AL: "Propofol-imprinted membranes with potential applications in biosensors" ANALYTICA CHIMICA ACTA, ELSEVIER, AMSTERDAM, NL, vol. 504, no. 1, 16 February 2004 (2004-02-16), pages 73-79, XP002396382 ISSN: 0003-2670

## Description

This invention relates to a sensor and in particular to a sensor for the detection of biologically important species.

Modem healthcare relies extensively on a range of chemical and biochemical analytical tests on tissue samples and a variety of body fluids to enable early recognition, diagnosis and management of disease. Accordingly, there is a significant market for in vitro diagnostics, including sensors.

Chemical sensors have found widespread use in numerous applications. Biosensors are examples of such sensors. In order to create a sensor for a specific analyte these sensors typically contain a chemical recognition element coupled to a means of signal transduction. The presence of the analyte of interest causes a measurable change in a property of the transduction material. A wide range of transduction modalities to convert the physico-chemical response to the analyte in the test medium into the measurement signal have been developed. Examples include amperometric, potentiometric, conductimetric, optical, gravimetric, surface-acoustic waves (SAW), thermal or capacitive principles.

To date chemically selective membranes and biomolecules, such as proteins (e.g. enzymes, antigens, antibodies), nucleic acids (DNA or RNA) or even whole microorganisms have been used as recognition elements. More recently, synthetic materials, such as synthetic receptors and molecularly imprinted polymers (MIPs) have been employed to replace the traditionally used recognition elements.

One of the most challenging issues in sensor manufacture relates to the reliable attachment or integration of the receptors with the transducer. In particular for multi-use devices, the receptor needs to be stable, robust and maintain its selectivity. It has to stay attached to the transducer over the complete period of use without degradation or leaching. Moreover, the receptor should continue to function despite the attachment/integration with the transducer surface; similarly the transducer should remain functional despite the attachment or integration of the receptor.

In addition, the use of chemical sensors is often affected by interferents, which affect the sensor response and lead to erroneous readings. The detection of the analyte of interest when bound to the receptor is also problematic.

Accordingly, the present invention provides a sensor for detecting an analyte in the presence of at least one interferent in a fluid sample comprising
a substrate,
a channel disposed on the substrate,
at least one transducer disposed in the channel, and
a filter for selectively absorbing the analyte in preference to the at least one interferent, wherein the filter is arranged in the channel remotely from the at least one transducer and wherein the channel defines a flow path for the fluid sample such that the fluid sample contacts a first transducer to generate a first signal, followed by the filter, followed by the first transducer or a second transducer to generate a second signal.

That is, the sensor comprises a selective filter which removes the analyte from the fluid sample allowing a measure to be taken before and after removal of the analyte. The filter is positioned to hold the analyte remotely from the transducer(s). This allows the analyte to be measured without having to bind the analyte selectively to a transducer which has significant practical difficulties.

The present invention will now be described with reference to the accompanying drawings, in which:
Fig. 1 shows a schematic representation of a sensor of the present invention in which the filter is disposed between a first and second transducer;
Fig. 2 shows a further schematic representation of a sensor of the present invention in which the filter is disposed between a first and second transducer;
Fig. 3 shows a schematic representation of a sensor of the present invention in which the filter is a coating on the fluid channel;
Fig. 4 shows a schematic representation of a sensor of the present invention in which the filter forms a bed of particles;
Fig. 5 shows an example of a multi-parameter chip incorporating the sensor of the present invention;
Fig. 6 shows a schematic representation of a sensor of the present invention employing a membrane across one transducer;
Fig. 7 shows a schematic representation of a sensor of the present invention in which the transducers are in parallel;
Fig. 8 shows a schematic representation of a sensor of the present invention having a bifurcated channel; and
Fig. 9 shows a sensor in accordance with the present invention incorporated into an intravenous monitoring system.

The present invention relates to a novel arrangement for chemical sensing and to a chemical sensor system. It provides a straight-forward means for detecting the presence of one or more analytes of interest in the sample being investigated and/or for measuring their concentration(s). One particular application area for these devices and systems relates to the detection and measurement of medical drugs, markers or medically relevant substances which are indicative of the health, status or treatment of a patient. The sensor or sensor system can, for example, be used to analyse the current state of health of the patient and/or direct treatment of a medical condition suffered by the patient. In this context, the term "patient" refers to both humans and animals. Furthermore, the term "sample" refers to a substance or mixture of substances being investigated and includes, in particular, but not limited to, bodily fluids, such as blood, urine, interstitial fluids and cerebro-spinal fluids.

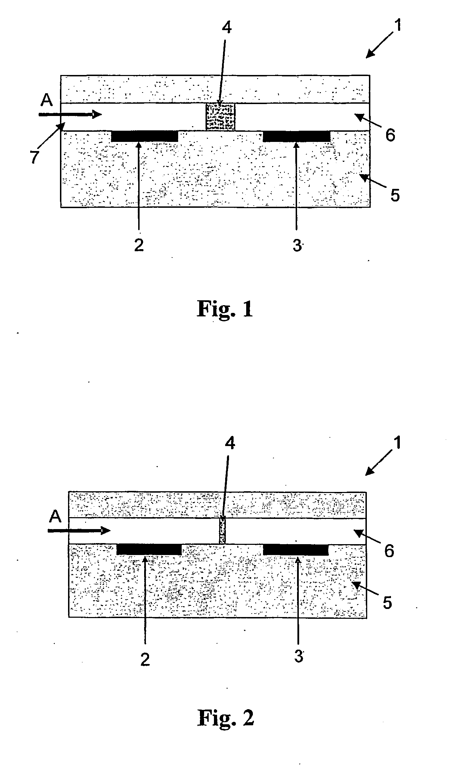

In order to resolve any issues associated with the attachment/integration of receptors with a transducer, the sensor of the present invention has a filter 4 which does not need to be bound to a transducer. Fig. 1 shows a sensor 1 having a first transducer 2 and second transducer 3 in between which is located a filter 4, which preferentially absorbs the analyte(s) to be detected. The transducers 2,3 and filter 4 are disposed on a substrate 5. Within the substrate 5 is disposed a channel 6. The transducers 2,3 and filter 4 are located in the channel 6. A fluid sample (not shown) enters the sensor through a port 7. As the sample passes through the sensor 1, it is first analysed by the first transducer 2, before it comes into contact with filter 4. Further analyses may also be formed by one or more additional transducers should this be required. This may be performed, for example, where additional measurements of the same analyte are required, or where different analytes are being detected. The first transducer 2 generates a signal which is communicated electronically to a central processing unit. The signal(s) is characteristic of the amount of analyte of interest and interferents contained in the sample. As the sample passes through the filter 4, a portion of the analyte of interest is removed from the sample. This portion may depend on the concentration of the analyte in the sample. After passage through the filter 4, the sample is analysed again, by a second transducer 3 disposed behind (i.e. downstream of) the filter 4 and the signal generated by the second transducer 3 is recorded. This transducer response is characteristic of the amount of interferents contained in the sample. Again, further analyses may be formed by one or more additional transducers should this be required.

By subtracting the signal generated by the second transducer 3 (located behind the filter) from the signal generated by the first transducer 2, a signal characteristic of the amount or concentration of the analyte of interest in the sample is obtained. The amount of the analyte(s) of interest contained in the sample can be calculated using, for example, appropriate sensor calibration. Rather than determining directly the presence of the analyte(s) of interest in the sample, the sensor 1 of the present invention determines the presence and/or concentration of analyte(s) of interest present in the sample by detecting the absence of the analyte removed from the sample by passage through the filter.

It is important that the fluid sample contacts the first transducer 2 to generate a first signal, followed by the filter 4, followed by the second transducer 3 to generate a second signal. In order to achieve this order of events, the channel 6 in the sensor 1 defines a flow path for the fluid sample which allows the fluid sample to contact the transducers 2,3 and filter 4 in this order. The direction of flow is indicated in Fig. 1 (and subsequent Figs.) by arrow A. The direction of flow defines an upstream and downstream position. However, it is not essential for the sensor 1 to have two transducers since the same transducer may be used to generate the first and second signals, provided that the fluid sample contacts the filter 4 between the taking of the measurements to generate the first and second signals. This may be achieved, for example, by contacting the fluid sample with the transducer, circulating the fluid sample through a channel containing the filter and returning the sample to the transducer. Thus, whilst it is preferred that the sensor 1 comprises a first transducer 2 to generate the first signal and a second transducer 3 to generate the second signal, one transducer would suffice.

In the sensor 1 of the present invention, the filter is arranged in the channel remotely from the at least one transducer. By remote is meant that the filter is sufficiently remote that any analyte present in the filter is not detected by the at least one transducer. If the analyte were detected by the transducer, the second signal could not be reliably subtracted from the first signal. This is a fundamentally different approach to known sensors, such as that disclosed in WO 2005/075995, where the transducer incorporates a material for selective binding of the analyte, but the bound analyte is detected by the transducer. In the sensor of the present invention, it is the absence of the analyte which is detected.

A key advantage of the sensor 1 of the present invention is that the receptor for the analyte(s) of interest is not integrated on top of the transducer surface, but can be disposed as a filter 4 in a convenient format remote from the transducers. Preferably the filter 4 is located between the first and second transducers 2,3. It therefore removes a number of manufacturing difficulties, is quicker and more cost-effective to produce and provides more design freedom. Moreover, this approach avoids any issues associated with the integration of receptor and transducer on the sensor performance.

The channel 6 is shown in Fig. 1 integral with the sensor, however, the channel 6 may also be a separate component disposed on the substrate 5, e.g. a capillary tube. The channel 6 must be positioned suitably to allow fluid communication between the transducer(s) 2,3 and the filter 4. In a preferred embodiment the channel 6 is formed by positioning a housing, e.g. a plastics housing, over the surface of the substrate 5 to define a channel 6 across the surface of the substrate 5. The housing is attached to the surface of the substrate 5 by a suitable adhesive.

A wide range of materials for the filter 4 can be used. These include chemically selective membranes (for example, polymer membranes containing ionophores which are known in the art and are commercially available from suppliers such as Sigma Aldrich) and biomolecules, such as proteins (e.g. enzymes, antigens, antibodies), nucleic acids (DNA or RNA), microorganisms or synthetic materials, such as synthetic receptors and molecularly imprinted polymers.

The synthetic polymer may be any synthetic polymer provided the polymer is capable of selectively binding an analyte (i.e. it functions as a receptor). The selective binding may be a result of functional groups on the polymer which interact with a specific analyte. The synthetic polymer preferably comprises one or more functionalised monomers and one or more cross-linkers. A preferred polymer is a molecularly imprinted polymer.

Molecularly imprinted polymers (MIPs) are essentially artificial macromolecular receptors prepared by molecular imprinting of synthetic polymers. MIPs are prepared by polymerising functional monomers or copolymerising functional and cross-linking monomers in the presence of an imprint molecule which acts as a molecular template. The functional monomers initially form a complex with the imprint molecule and, following polymerisation, their functional groups are held in position by the highly cross-linked polymeric structure. In this way, a molecular memory is introduced into the polymer which is then capable of binding the imprint molecule. The imprinting of small organic molecules is now well established in the art.

The functional monomer should be capable of binding to the imprint molecule, via functional groups on the functional monomer. Binding may be via a covalent bond or by intramolecular forces, such as a hydrogen bond or van der Waals forces. A suitable functional group may be, for example, a carboxylic acid in a (meth)acrylic acid ester, although the nature of the functional group will depend on the nature of the imprint molecule. The monomer must, of course, be polymerisable and able to react with a cross-linker when present. Suitable monomers include, but are not limited to, acrylic monomers, such as (meth)acrylic acid, (meth)acrylic acid esters, (meth)acrylamide, (meth)acrylonitrile, 2-hydroxyethylmethacrylate (HEMA), N,N,N-triethylaminoethyl(meth)acrylate, trifluoromethylacrylic acid, acrylamide, N,N'-methylenebisacrylamide, acrylonitrile, 2-acrylamido-2-methyl-1-propanesulfonic acid acrolein, ethylene glycol dimethacrylate, imidazole-4-acrylic acid ethyl ester, imidazole-4-acrylic acid, 2-(diethylamino)ethyl methacrylate; vinyl and allyl monomers, such as 2- and 4-vinylpyridine, m-and p-divinylbenzene, styrene, aminostyrene 1-vinylimidazole, allylamine; urethanes; phenols; boronates, such as aminophenyl boronate; amines, such as phenylene diamine, phenylene diamine-co-aniline; organosiloxane monomers; carbonate esters, such as methylenesuccinic acid; sulfonic acid; or mixtures (i.e. co-polymers) thereof. See M. Komiyama et al. Molecular Imprinting: From Fundamentals to Applications, Wiley-VCH Verlag GmbH & Co KGaA, Weinheim (2003), G. Wulff Angew. Chem. Int. Ed. Engl. 34, 1812 (1995), and S. Subrahmanyam et al. Biosensors & Bioelectronics 16, 631 (2001).

The cross-linker may be included to fix the template-binding sites firmly in the desired structure as well as to influence the porosity of the MIP. The cross-linker must be capable of reacting with the functional monomers to cross link the polymer chains and the cross-linker should preferably be of similar reactivity to the monomer. Suitable cross-linkers include, but are not limited to, ethylene glycol dimethacrylate (EDMA), glycerol dimethacrylate (GDMA), trimethylacrylate (TRIM), divinylbenzene (DVB) (which is particularly suitable for cross linking acrylate- and vinyl-containing functional monomers), methylenebisacrylamide and piperazinebisacrylamide (which are particularly suitable for cross linking acylamides), phenylene diamine (which is particularly suitable for cross linking amines such as aniline and aminophenyl boronate), dibromobutane, epichlorohydrine, trimethylolpropane trimethacrylate and N,N'-methylenebisacrylamide.

The mole ratio of functional monomer to cross-linker is preferably from 1:1 to 1:15. Mixtures of monomers and cross-linkers may also be used.

The functional monomer and/or the cross-linker may act as a solvent for the polymerisation reaction or an additional solvent may be added. Suitable solvents are known in the art and include DMSO (dimethyl sulfoxide), formic acid, acetic acid, DMF (dimethylformamide), methanol, acetonitrile, dichloromethanc, chloroform, THE (tetrahydrofuran), toluene and cyclohexane. Mixtures of these solvents may also be used to obtain the desired solvation and porogenic properties.

The polymer preferably has a molecular weight from 1 to 100,000 kDa, more preferably 10 to 10,000 kDa and most preferably 10 to 5,000 kDa.

See WO 2005/075995, WO 2006/120381 and WO 2006/120382 for further details regarding MIPs and other synthetic polymers which may be used with the sensor 1 of the present invention.

In the case of a sensor for the anaesthetic drug propofol, one preferred class of materials to be used in the filter arc molecular imprinted polymers (MIP). For example, a non-covalent MIP capable of binding propofol and composed of methacrylic acid (MAA) as the functional monomer and ethylenedimethylacrylic acid (EDMA) as the cross-linker. See WO 02/00737 and WO 2006/120381 for further details.

Fig. 2 shows a particular embodiment of the invention in which the sensor 1 has two amperometric transducers 2,3 of identical design located inside the senor, one upstream of the filter 4 and one downstream of the filter 4. The filler 4 is composed of a membrane, which spans the flow path. Both amperometric transducers 2,3 are operated at or above a potential at which the analytes of interest is oxidised or reduced. For example, for the analyte propofol, an oxidation potential of 0.3 V or above may be used. Ideally, the potential is chosen to be as low as possible in order to avoid interference from other substances. The transducer 2 disposed upstream of the filter membrane measures a current which depends on the concentration of the analyte of interest in the sample, e.g. propofol, and of any other substance (interferent), which can be oxidised/reduced at this potential. The filter 4 contains a material, which preferentially absorbs the analyte of interest, for example, propofol, and removes a fraction of the analyte of interest contained in the sample from the sample. The transducer 3 downstream of the filter 4 is operated at the same potential. It measures a current, which depends on the total concentration of all substances contained in the filtered sample, which can be oxidised/reduced at this potential. As the filter 4 has removed preferentially the analyte of interest from the sample, the difference in response between the two sensors will primarily depend on the concentration of the analyte of interest in the sample. Using an appropriate calculation and/or calibration, the concentration of the analyte of interest in the sample can be calculated.

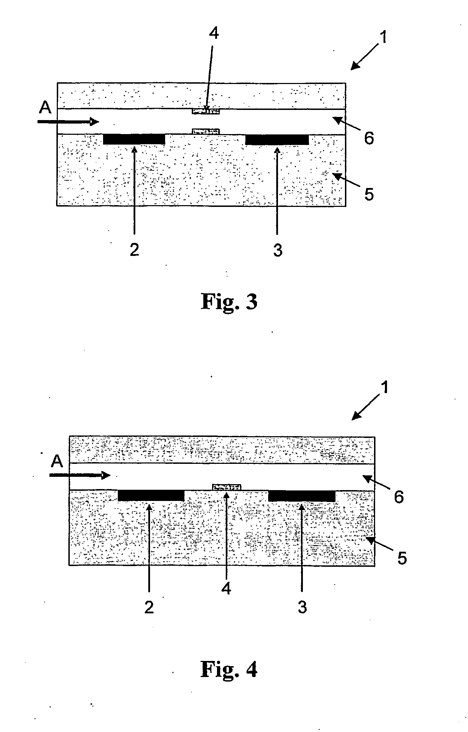

The filter 4 is preferably positioned such that the whole of the fluid sample passes through the filter 4, as shown in Fig. 1. The filter 4 can also be realised in form of a membrane spanning the fluid channel (see Fig. 2). Alternatively, it could be a small column of particles incorporated into the channel. In yet another embodiment, it may be coated on an interior wall of the channel (see Fig. 3). In a further embodiment of the invention it may be a bed of particles in contact with the fluid channel (see Fig. 4). The filter may also be a block of material, it may be composed of particles or it may be a powder. Other approaches are known to those skilled in the art.

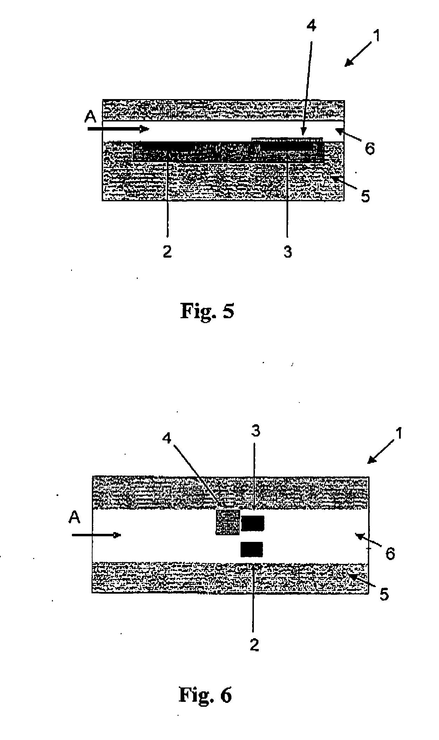

In the embodiment shown in Fig. 5, the filter 4 is disposed over the second transducer but in such a manner that the transducer is unable to detect the presence of any bound analyte. This could be by providing an intervening material between the filter 4 and the transducer 3 and the filter 4, or by applying the filter 4 in a sufficient thickness that the analyte is still held remote from the transducer and hence cannot be detected. This maintains the remote nature of the filter 4. Although this embodiment is useful in some applications, preferably the filter 4 is physically remote from the transducer, i.e. the filter is not in physical contact with the second transducer, where present, and more preferably not in physical contact with any of the transducers capable of detecting the analyte of interest.

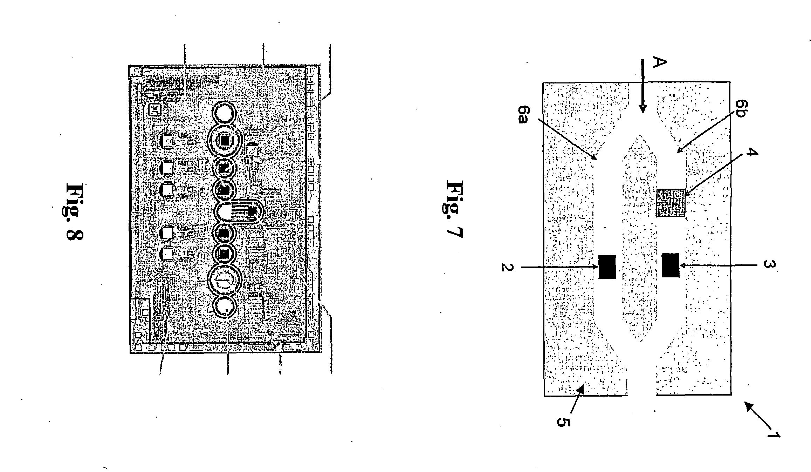

In another embodiment of the invention, Fig. 6 shows two transducers 2,3 are arranged side by side in the flow channel, but the filter 4 is disposed in close proximity to one transducer 3 (i.e. the first and second transducers 2,3 are located in parallel in the channel and the filter is located upstream of the second transducer). In yet another embodiment shown in Fig. 7, the channel 6 splits the fluid path into two, i.e. the channel is bifurcated. The first transducer 2 is disposed in a first branch 6a of the channel 6, the second transducer 3 is located in a second branch 6b of the channel. The filter 4 is located in the second branch 6b of the channel 6 upstream of second transducer 3.

Although the sensors shown in Figs. 1-7 incorporate one filter 4, the sensor 1 may comprise a plurality of filters.

The amperometric sensor can be of two electrode or three-electrode design. The electrodes may be made of a number of materials, including silver, gold, platinum, carbon, stainless steel. Other materials are known to those skilled in the art. The amperometric sensor may also be functionalised through the deposition of enzymes (for example, glucose oxidase, lactate oxidase, or other suitable chemicals), membranes (for example, comprising silicone, HEMA, PVC, Nafion, polyurethane) in order to detect preferentially the analyte of interest and remove the effects of interferents. One example to functionalise a sensor for the measurement of glucose in this manner is described in US 6,440,296.

While the preferred embodiment of this invention has been described with particular reference to amperometric sensors, a large number of transduction principles can be used to realise the invention. These include potentiometric (in particular, ion selective field effect transistors, ISFETs, and chemically selective field effect transistor, CHEMFETs), conductimetric, optical, gravimetric, surface-acoustic waves, resonant, capacitive or thermal principles. The sensors may be functionalised to preferentially detect the analyte of interest, to detect a group of analytes of interest or to reduce the effect of interferents through the deposition of chemically selective membranes (for example, polymer membranes containing ionophores) and biomolecules, such as proteins (e.g. enzymes, antigens, antibodies), nucleic acids (DNA or RNA), microorganisms or synthetic materials, such as synthetic receptors and molecularly imprinted polymers. Many methods to achieve this are known to those skilled in the art.

Rather than employing transducers of the same type, one embodiment of the sensor uses one transducer type upstream of the filter, for example an amperometric transducer, while a different transducer type is employed downstream of the filter, for example, a potentiometric sensor. The responses from both sensors are then converted to provide an indication of the total concentration of the analyte of interest and interferents at the location of the transducer using, for example, appropriate sensor calibrations. The difference in the concentration measurements of the two transducers is related to the absorption of the analyte of interest on the filter and therefore to the concentration of the analyte of interest in the sample.

In another preferred embodiment of the invention, the sensor is a micromachined device. The transducers employed in the chemical sensor can be realised on the same die or different dies. One particular example of a silicon-based microsensor chip with multiple transducers is shown in Fig. 8. It includes a range of transducers based on potentiometric (in particular, ion selective field effect transistors, ISFETs, and chemically selective field effect transistor, CHEMFETs), amperometric and conductimetric principles.

In addition to filtering out the effect of interferents, the differential approach utilised in the invention is also able to remove any disturbance or effect, which affects both transducers. It is therefore able to compensate, for example, for temperature-related effects, changes in the supply voltage for the transducers, flow speed variations etc.

Following the measurement, the filter 4 may be regenerated, for example by passing an appropriate fluid through the sensor chamber, applying temperature changes or electrical potential changes in order to remove any material absorbed on the filter. Alternatively, the filter may be designed in such a way that it possesses enough capacity to enable multiple uses or continuous operation without regeneration. This latter approach is of particular advantage for sensor for continuous use or in an application, where regeneration of the filter is not possible.

In another embodiment of the invention, the adsorption of the analyte(s) of interest will release another agent into the sample, which is subsequently detected by a transducer which is capable of detecting the agent. In this case, the increase in the sensor signal associated with the release of the agent in the fluid is measured.

While most embodiments in this invention have been described with reference to a construction employing a single continuous substrate 5, another embodiment of the invention can be realised by mounting each transducer on its own substrate and connecting them in series. The filter is then integrated into the fluid connection between the two substrates.

In another embodiment of the invention, the sensor is adapted to detect a first analyte and a second or further analyte. In this case, the sensor contains one or more filters for selectively absorbing the first, second or further analyte in preference to the at least one interferent. Where a number of filters are used, one filter may specifically absorb one analyte, while a second filter employed in series to the first filter may specifically absorb a second analyte of interest, etc.

Within the area of clinical and medical diagnostics, the sensor disclosed herein is particularly useful for the analysis of blood with respect to the presence and concentration of markers or substances indicative of the health or status of a patient or drugs used in the treatment of a patient's condition. In particular, sensors based on the invention can be applied to the following areas: measurement of anaesthetic agents, in particular those administered intravenously, such as propofol (propofol can be administered in a variety of forms, for example as an emulsion or in an aqueous forms); detection and measurement of antibiotic agents, e.g. penicillin and vancomycin; detection and measurement of heart markers, such as troponins, ischaemia-modified albumin etc.; and measurement of electrolytes and gases dissolved in bodily fluids, such as blood and urine.

The sensor of the present invention may be adapted to detect any of the above analytes. The adaptation is apparent from the breadth at which the signal is detected, e.g. the voltage range selected for a potentiometric transducer.

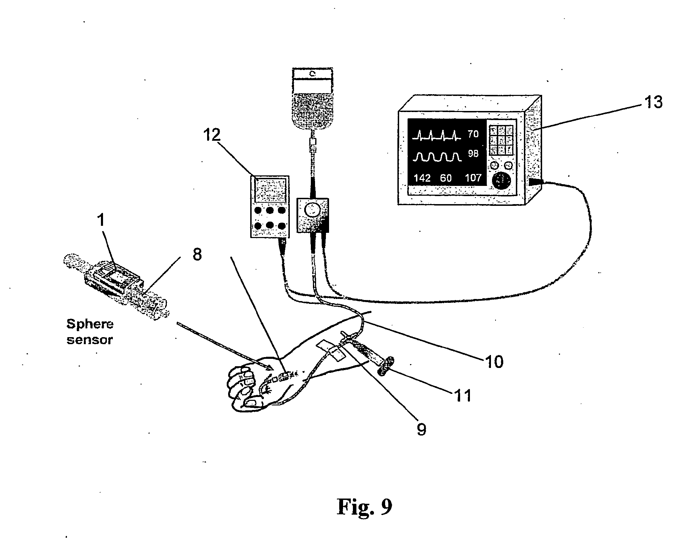

The sensor of the present invention is typically incorporated into a sampling system and a signal processing unit. Accordingly, the present invention also provides a sampling apparatus comprising a housing coupled to a sampling port and incorporating the sensor as described herein and a signal processing unit in electronic communication with the sensor. An example of such a system is shown in Fig. 9. The system is equipped with a housing 8 incorporating the sensor 1 coupled to a sampling port 9 in an intravascular line 10 above the sensor 1. A sampling device 11, for example a syringe, is coupled to the sampling port 9. Using the sampling device 11, the user will withdraw blood flushing it across the sensor 1 in order to take a measurement. After the measurement is completed, the blood may be flushed back into the patient or it may be flushed to waste. In another embodiment, the sensor can be incorporated into the intravascular-flushing line, for example, along with one or more other sensors, such as a pressure sensor. Samples may be taken either periodically, regularly, event-driven, on demand or following a user intervention.

The sensor 1 is connected to a local display and signal processing unit 12 which may be connected to a patient monitoring device 13. The sensor 1 is also connected to the housing 8 electronically using techniques known in the art.

In addition to the system described above, the sensor may be employed in a range of other sensing systems, known to those skilled in the art. For example, rather than being directly connected to the patient, a sample may be taken from the patient and transported to and injected into an analyser, into which the sensor is integrated, for sample analysis.

In addition to providing detection and measurements of markers, substances or drugs, the sensor of the present invention provides feedback for the treatment of the patient based on the results of the analysis made. This feedback may be provided either directly to the user or it may be part of a closed-loop control system including the device administering the treatment to the patient. One particular example is a sensor for an anaesthetic agent, such as propofol, which measures the concentration of the anaesthetic agent in one or more bodily fluids or body compartments, e.g. blood or blood plasma, and based on these measurements directs, either directly or the user, the subsequent delivery of the anaesthetic agent, e.g. by controlling the rate of delivery to the patient via a syringe pump.

The sensor may also be used with systems which monitor other parameters which characterise the health of a patient, monitor particular markers indicating disease states or direct the patient's treatment, e.g. blood gases, pH, temperature etc.

The present invention further provides a method of detecting an analyte in the presence of at least one interferent in a fluid sample comprising
providing a fluid sample potentially containing the analyte,
contacting the fluid sample with the sensor as described herein,
obtaining the first and second signals, and
comparing the first and second signals to provide an indication of the amount of the analyte present in the sample.

## Claims

1. A sensor (1) for detecting an analyte in the presence of at least one interferent in a fluid sample comprising
a substrate (5),
a channel (6) disposed on the substrate,
at least one transducer disposed in the channel, and
a filter (4) for selectively absorbing the analyte in preference to the at least one interferent,
wherein the filter is arranged in the channel remotely from the at least one transducer and wherein the channel defines a flow path for the fluid sample such that the fluid sample contacts a first transducer (2) to generate a first signal, followed by the filter, followed by the first transducer or a second transducer (3) to generate a second signal.

2. A sensor as claimed in claim 1, wherein the sensor comprises a first transducer to generate the first signal and a second transducer to generate the second signal.

3. A sensor as claimed in claim 2, wherein the filter is located between the first and second transducers.

4. A sensor as claimed in any preceding claim, wherein the filter is positioned such that the whole of the fluid sample passes through the filter.

5. A sensor as claimed in any of claims 1 to 3, wherein the filter is coated on an interior wall of the channel.

6. A sensor as claimed in claim 2, wherein the filter is disposed over the second transducer.

7. A sensor as claimed in claim 2, wherein the first and second transducers are located in parallel in the channel and the filter is located upstream of the second transducer.

8. A sensor as claimed in claim 2, wherein the channel is bifurcated and the first transducer is disposed in a first branch of the channel, the second transducer is located in a second branch of the channel, and the filter is located in the second branch of the channel upstream of second transducer.

9. A sensor as claimed in any preceding claim, wherein the fluid sample is a bodily fluid.

10. A sensor as claimed in any preceding claim, wherein the filter has a sufficient capacity for the analyte to allow multiple or continuous use of the sensor.

11. A sensor as claimed in any preceding claim, wherein the filter comprises a synthetic polymer, a biomolecule, a microorganism or a combination thereof.

12. A sensor as claimed in claim 11, wherein the filter comprises an ionophore, a molecularly imprinted polymer, an enzyme, an antigen, an antibody, a nucleic acid or a combination thereof.

13. A sensor as claimed in any preceding claim, wherein the filter comprises an agent which is released when the filter absorbs the analyte, and wherein the at least one transducer is capable of detecting the agent.

14. A sensor as claimed in any preceding claim, wherein the at least one transducer is an amperometric sensor, a potentiometric sensor, a conductimetric sensor, an optical sensor, a gravimetric sensor, a surface-acoustic wave sensor, a resonant sensor, a capacitive sensor or a thermal sensor.

15. A sensor as claimed in any preceding claim, wherein the sensor detects a first analyte and a second or further analyte, wherein the sensor contains one or more filters for selectively absorbing the first, second or further analyte in preference to the at least one interferent.

16. A sampling apparatus comprising a housing coupled to a sampling port (9) and incorporating the sensor as claimed in any preceding claim, and a signal processing unit (12) in electronic communication with the sensor.

17. A method of detecting an analyte in the presence of at least one interferent in a fluid sample comprising
providing a fluid sample potentially containing the analytc,
contacting the fluid sample with the sensor as claimed in any of claims 1 to 15,
obtaining the first and second signals, and
comparing the first and second signals to provide an indication of the amount of the analyte present in the sample.

18. A method as claimed in claim 17, wherein the fluid sample is a bodily fluid.

## Patentansprüche

1. Sensor (1) zur Erkennung eines Analyten in Gegenwart wenigstens eines Störstoffs in einer Fluidprobe, mit
einem Substrat (5),
einem auf dem Substrat angeordneten Kanal (6),
wenigstens einem in dem Kanal angeordneten Wandler, und einem Filter (4) zur gezielten Absorption des Analyten vorrangig vor dem wenigstens einen Störstoff,
bei dem der Filter in dem Kanal von dem wenigstens einen Wandler entfernt angeordnet ist und der Kanal einen Strömungsweg für die Fluidprobe bildet, derart, dass die Fluidprobe mit einem ersten Wandler (2) zur Erzeugung eines ersten Signals in Kontakt gelangt, gefolgt von dem Filter, gefolgt von dem ersten Wandler oder einem zweiten Wandler (3) zur Erzeugung eines zweiten Signals.

2. Sensor nach Anspruch 1, bei dem der Sensor einen ersten Wandler zur Erzeugung des ersten Signals und einen zweiten Wandler zur Erzeugung des zweiten Signals umfasst.

3. Sensor nach Anspruch 2, bei dem sich der Filter zwischen dem ersten und dem zweiten Wandler befindet.

4. Sensor nach einem vorhergehenden Anspruch, bei dem der Filter so positioniert ist, dass die gesamte Fluidprobe den Filter durchläuft.

5. Sensor nach einem der Ansprüche 1 bis 3, bei dem der Filter als Beschichtung auf einer Innenwand des Kanals angebracht ist.

6. Sensor nach Anspruch 2, bei dem der Filter über dem zweiten Wandler angeordnet ist,

7. Sensor nach Anspruch 2, bei dem der erste und der zweite Wandler in dem Kanal parallel zueinander liegen und der Filter sich stromaufwärts des zweiten Wandlers befindet.

8. Sensor nach Anspruch 2, bei dem der Kanal gegabelt ist und der erste Wandler in einem ersten Zweig des Kanals angeordnet ist, der zweite Wandler sich in einem zweiten Zweig des Kanals befindet und der Filter sich in dem zweiten Zweig des Kanals stromaufwärts des zweiten Wandlers befindet.

9. Sensor nach einem vorhergehenden Anspruch, bei dem die Fluidprobe eine Körperflüssigkeit ist.

10. Sensor nach einem vorhergehenden Anspruch, bei dem der Filter ein ausreichendes Aufnahmevermögen für den Analyten hat, damit der Sensor mehrfach oder kontinuierlich verwendet werden kann.

11. Sensor nach einem vorhergehenden Anspruch, bei dem der Filter ein synthetisches Polymer, ein Biomolekül, einen Mikroorganismus oder eine Kombination davon umfasst.

12. Sensor nach Anspruch 11, bei dem der Filter ein lonophor, ein molekular geprägtes Polymer, ein Enzym, ein Antigen, einen Antikörper, eine Nukleinsäure oder eine Kombination davon umfasst.

13. Sensor nach einem vorhergehenden Anspruch, bei dem der Filter ein Agens umfasst, das freigesetzt wird, wenn der Filter den Analyten absorbiert, und bei dem der wenigstens eine Wandler zur Erkennung des Agens in der Lage ist.

14. Sensor nach einem vorhergehenden Anspruch, bei dem der wenigstens eine Wandler ein amperometrischer Sensor, ein potentiometrischer Sensor, ein konduktometrischer Sensor, ein optischer Sensor, ein gravimetrische Sensor, ein akustischer Oberflächenwellensensor, ein Resonanzsensor, ein kapazitiver Sensor oder ein Wärmesensor ist.

15. Sensor nach einem vorhergehenden Anspruch, bei dem der Sensor einen ersten Analyten und einen zweiten oder weiteren Analyten erkenne, wobei der Sensor einen oder mehrere Filter zur gezielten Absorption des ersten, des zweiten oder weiteren Analyten vorrangig vor dem wenigstens einen Störstoff enthält.

16. Probenahmevorrichtung mit einem Gehäuse, das an eine Probenahmeöffnung (9) gekoppelt ist und in dem der Sensor nach einem vorhergehenden Anspruch eingebaut ist, und mit einer Signalverarbeitungseinheit (12), die mit dem Sensor elektronisch in Verbindung steht.

17. Verfahren zur Erkennung eines Analyten in Gegenwart wenigstens eines Störstoffs in einer Fluidprobe, bei dem
eine Fluidprobe bereitgestellt wird, die potentiell den Analyten enthält,
die Fluidprobe mit dem Sensor nach einem der Ansprüche 1 bis 15 in Kontakt gebracht wird,
das erste und das zweite Signal erhalten werden, und zur Lieferung einer Angabe über den Gehalt des in der Probe vorliegenden Analyten das erste und das zweite Signal verglichen werden.

18. Verfahren nach Anspruch 17, bei dem die Fluidprobe eine Körperflüssigkeit ist.

## Revendications

1. Détecteur (1) pour détecter la présence d'une substance à analyser en présence d'au moins un interférent dans un échantillon de fluide comprenant :
un substrat (5),
un canal (6) présent dans le substrat,
au moins un transducteur disposé dans le canal et un filtre (4) pour absorber sélectivement la substance à analyser de préférence,
dans lequel le filtre est disposé dans le canal à distance du au moins un transducteur et dans lequel le canal définit un passage d'écoulement pour l'échantillon de fluide de manière que le fluide entre en contact avec un premier transducteur (2) pour générer un premier signal, ensuite avec le filtre puis avec le premier transducteur ou un second transducteur (3) pour générer un second signal.

2. Détecteur selon la revendication 1, dans lequel le détecteur comporte un premier transducteur pour générer le premier signal et un second transducteur pour générer le second signal.

3. Détecteur selon la revendication 2, dans lequel le filtre est situé entre les premier et second transducteurs.

4. Détecteur selon l'une des revendications précédentes, dans lequel le filtre est positionné de telle façon que la totalité de l'échantillon de fluide passe à travers le filtre.

5. Détecteur selon l'une des revendications 1 à 3, dans lequel le filtre tapisse une paroi intérieure du canal.

6. Détecteur selon la revendication 2, dans lequel le filtre est situé au-dessus du second transducteur.

7. Détecteur selon la revendication 2, dans lequel les premier et second transducteurs sont disposés parallèlement dans le canal et le filtre est situé en amont du second transducteur.

8. Détecteur selon la revendication 2, dans lequel le canal présente une bifurcation et le premier transducteur est disposé dans une première branche du canal, le second transducteur est disposé dans une seconde branche du canal et le filtre est disposé dans la seconde branche du canal en amont du second transducteur.

9. Détecteur selon l'une des revendications précédentes, dans lequel l'échantillon de fluide est un fluide corporel.

10. Détecteur selon l'une des revendications précédentes, dans lequel le filtre a une capacité suffisante pour la substance à analyser pour permettre plusieurs usages, ou un usage continu, du détecteur.

11. Détecteur selon l'une des revendications précédentes, dans lequel le filtre comprend un polymère synthétique, une biomolécule, un microorganisme ou une combinaison de ceux-ci.

12. Détecteur selon la revendication 11, dans lequel le filtre comprend un ionophore, un polymère à empreinte moléculaire, une enzyme, un antigène, un anticorps, un acide nucléique ou une combinaison de ceux-ci.

13. Détecteur selon l'une des revendications précédentes, dans lequel le filtre comprend un agent qui est lâché lorsque le filtre absorbe la substance à analyser et dans lequel le au moins un transducteur est capable de détecter l'agent.

14. Détecteur selon l'une des revendications précédentes, dans lequel le au moins un transducteur est un capteur ampérométrique, un capteur potentiométrique, un capteur conductimétrique, un capteur optique, un capteur gravimétrique, un capteur à ondes acoustiques de surface, un capteur résonnant, un capteur capacitif ou un capteur thermique.

15. Détecteur selon l'une des revendications précédentes, dans lequel le détecteur détecte une première substance à analyser et une seconde ou une autre substance à analyser, le capteur contenant un ou plusieurs filtres pour absorber sélectivement la première, la seconde ou l'autre substance à analyser de préférence au au moins un interférent.

16. Appareil d'échantillonnage comportant un boîtier relié à un port d'échantillonnage (9) et contenant le détecteur selon les revendications précédentes et une unité de traitement de signaux (12) en communication électronique avec le capteur.

17. Procédé de détection d'une substance à analyser en présence d'au moins un interférent dans un échantillon de fluide comprenant les étapes suivantes :
fournir un échantillon de fluide contenant potentiellement une substance à analyser,
mettre l'échantillon de fluide en contact avec le détecteur selon l'une des revendications 1 à 15,
obtenir le premier et le second signal et
comparer le premier et le second signal pour fournir une indication sur la quantité de substance à analyser présente dans l'échantillon.

18. Procédé selon la revendication 17, dans lequel l'échantillon de fluide est un fluide corporel.
